# EUROPEAN PATENT APPLICATION

(11) **EP 4 653 280 A1**
(43) Date of publication of application: **26.11.2025**
(21) Application number: 24177781.2
(22) Date of filing: 23.05.2024
(51) Int. Cl.: B60W 30/095, B60W 40/04, B60W 30/09, B60W 50/00, B60W 60/00, B60Q 1/34

(54) **METHOD FOR DETERMINING A LIKELIHOOD THAT A TARGET VEHICLE IS PLANNING TO PERFORM A U-TURN, METHOD FOR CONTROLLING AN EGOVEHICLE, METHOD FOR CONTROLLING AN OBSERVER VEHICLE, DATA PROCESSING APPARATUS, COMPUTER PROGRAM, COMPUTER-READABLE STORAGE MEDIUM, AND SYSTEM**

(71) Applicant: Volvo Car Corporation, 405 31 Göteborg (SE)
(72) Inventor: PEREZ BARRERA, Oswaldo, 40531 Göteborg (SE); MORALES, Gerardo, 40531 Göteborg (SE)
(74) Representative: Maiwald GmbH

(57) **Abstract**

The disclosure relates to a method for determining a likelihood that a target vehicle (14) is planning to perform a U-turn from a perspective of an ego-vehicle (10). The method comprises obtaining first data indicative of the target vehicle (14), obtaining at least one driving state attribute (42) of the target vehicle (14) based on the first data, obtaining second data indicative of an environment of the target vehicle (14), obtaining a U-turn indicator (44) indicative of a possibility of the target vehicle (14) to perform a U-turn in the environment based on the second data, and determining the likelihood that the target vehicle (14) is planning to perform a U-turn at least based on the at least one driving state attribute (42) and the U-turn indicator (44). Further, the disclosure relates to a method for controlling the ego-vehicle (10) and to a method for controlling an observer vehicle. Moreover, the disclosure is directed to a data processing apparatus as well as to a computer program and a computer-readable storage medium. Finally, the disclosure shows a system for determining a likelihood that a target vehicle (14) is planning to perform a U-turn.

## Description

### TECHNICAL FIELD

The present disclosure relates to a method for determining a likelihood that a target vehicle is planning to perform a U-turn.

Moreover, the present disclosure relates to a method for controlling an ego-vehicle and to a method for controlling an observer vehicle.

Furthermore, the present disclosure is directed to a data processing apparatus, a computer program, and a computer-readable storage medium.

Finally, the present disclosure relates to a system for determining a likelihood that a target vehicle is planning to perform a U-turn.

### BACKGROUND ART

In the present context, a U-turn is a turn of substantially 180° that a target vehicle makes so that it can move forward in an opposite direction. Usually, the U-turn involves moving from a first lane oriented in a first direction onto a second lane oriented in a second direction, wherein the first direction and the second direction are oriented opposite to one another. In situations in which more than one lane is oriented in the first direction and/or in the second direction, it is also possible that the target vehicle crosses one or more lanes when performing a U-turn.

Thus, a U-turn is a maneuver which needs a comparatively large space on the road on which the U-turn is performed. Moreover, performing a U-turn involves the risk of interfering with other traffic participants, e.g. vehicles, both on the first lane and the second lane.

### SUMMARY

Therefore, it is an objective of the present disclosure to mitigate the risk of interference associated with the performance of a U-turn.

The problem is at least partially solved or alleviated by the subject matter of the independent claims of the present disclosure, wherein further examples are incorporated in the dependent claims.

According to a first aspect, there is provided a method for determining a likelihood that a target vehicle is planning to perform a U-turn. This is done from the perspective of an ego-vehicle. The method comprises:
- obtaining first data indicative of the target vehicle,
- obtaining at least one driving state attribute of the target vehicle based on the first data,
- obtaining second data indicative an environment of the target vehicle,
- obtaining a U-turn indicator indicative of a possibility of the target vehicle to perform a U-turn in the environment based on the second data, and
- determining the likelihood that the target vehicle is planning to perform a U-turn at least based on the at least one driving state attribute and the U-turn indicator.

As has been mentioned before a target vehicle performing a U-turn is to be understood as the target vehicle performing a sharp turn in order to reverse its driving direction. In countries in which vehicles drive on the right-hand side of the road, a U-turn is usually performed by a sharp turn to the left. In countries in which vehicles drive on the left-hand side of the road, a U-turn is usually performed by a sharp turn to the right. However, the present method may also be executed using other turning directions. This may happen if the target vehicle is acting as a wrong-way driver and/or if the target vehicle is travelling on a road with multiple lanes in the same direction. The state of planning to perform a U-turn means that the target vehicle has not started the actual U-turn yet. This includes scenarios in which the target vehicle has already initiated preparatory measures for the U-turn but also includes scenarios in which the target vehicle has not initiated preparatory measures for the U-turn, yet. Thus, using the present method allows to predict or anticipate whether the target vehicle is going to perform a U-turn in a given traffic scenario. In simplified words, the possibility to make a U-turn in the relevant environment and the driving behavior of the target vehicle are considered to this end. Consequently, the likelihood that the target vehicle is planning to perform a U-turn may be determined with high reliability. This enhances road safety.

It is noted that the fact that the likelihood that the target vehicle is planning to perform a U-turn is determined from a perspective of the ego-vehicle does not imply a certain relative orientation of the ego-vehicle with respect to the target vehicle and vice versa. This means that the ego-vehicle and the target vehicle may be travelling into the same direction or in opposite directions or in any other directions enclosing an angle therebetween.

In the context of the present method, obtaining first data indicative of the target vehicle may comprise receiving or determining the first data at the ego-vehicle. The first data may for example comprise an image and/or a video sequence acquired by a camera of the ego-vehicle showing the target vehicle. Additionally or alternatively, the first data comprise radar data and/or lidar data comprising a representation of the target vehicle. In order to be able to obtain first data indicative of the target vehicle, the ego-vehicle may drive in the surroundings of the target vehicle. The ego-vehicle may be driving into the same direction as the target vehicle or the ego-vehicle may be driving in a different direction than the target vehicle. The ego-vehicle driving in a different direction than the target vehicle involves both travelling in an opposite direction than the target vehicle and travelling in an arbitrary direction relative to the target vehicle, for example at a crossroads. The first data form the basis for obtaining the at least one driving state attribute.

Obtaining at least one driving state attribute of the target vehicle based on the first data is to be understood as receiving or determining the at least one driving state attribute at the ego-vehicle. The at least one driving state attribute allows to draw a conclusion on the intention of the target vehicle and/or the driver of the target vehicle to perform a U-turn. This conclusion may be associated with a certain likelihood. In other words, this step of the method aims to check whether a driving behavior of the target vehicle points towards a certain likelihood that the target vehicle and/or the driver of the target vehicle intends to perform a U-turn. 4his method step may comprise a check for exclusions, i.e. a check for cases in which the target vehicle definitely does not intend to make a U-turn or at least is associated with a high likelihood that the target vehicle does not intend to make a U-turn. In these cases, the driving behavior of the target vehicle is due to reasons other than performing a U-turn.

Obtaining second data indicative of an environment of the target vehicle is to be understood as receiving or determining the second data at the ego-vehicle. The environment of the target vehicle may be understood as the surroundings of the target vehicle. Similar to the first data, the second data may comprise an image and or a video sequence acquired by a camera of the ego-vehicle showing the environment of the target vehicle. Additionally or alternatively, the second data may comprise radar data or lidar data. The first data and the second data may be obtained in combination, e.g. as one single data stream, or separate from one another, e.g. as different data streams. The second data form the basis for obtaining a U-turn indicator.

Obtaining a U-turn indicator indicative of the possibility of the target vehicle to perform a U-turn in the environment based on the second data means receiving or determining the U-turn indicator at the ego-vehicle. In other words, this step of the method involves checking if it is possible for the target vehicle to perform a U-turn given the conditions of the road on which the target vehicle is travelling and/or a traffic situation in which the target vehicle is travelling. The possibility to perform a U-turn may be associated with a likelihood.

Thus, determining the likelihood that the target vehicle is planning to perform a U-turn is at least based on the at least one driving state attribute and on the U-turn indicator. This likelihood may be determined at the ego-vehicle. Consequently, the ego-vehicle is in a position to be able to adapt its driving behavior to the likelihood that the target vehicle is planning to perform a U-turn. In doing so, a potential interference between the target vehicle performing a U-turn and the ego-vehicle may be avoided or at least mitigated. Altogether, road safety is enhanced.

According to an example, the likelihood may be expressed using at least two likelihood categories, e.g. associated with a low likelihood and a high likelihood. Alternatively, the likelihood may be expressed on a continuous scale. According to a further example, a fine gradation of the likelihood may be determined from a multitude of different driving state attributes considered when executing the method and/or a multitude of U-turn indicators considered when executing the method.

According to an example, the likelihood that the target vehicle is planning to perform a U-turn is expressed in the form of a likelihood category. In a simple case, one likelihood category may relate to a high likelihood and another likelihood category may relate to a low likelihood. Thus, the method results in a determination whether the likelihood that the target vehicle is planning to perform a U-turn is high or low. In other examples more than two likelihood categories may be used. It is also possible to express the likelihood categories in ranges expressed in percent, e.g. 0% to 25%, 25% to 50%, 50% to 75% and 75% to 100%.

In an example, the at least one driving state attribute is indicative of one or more of:
- a travelling speed of the target vehicle,
- an activation of a tail light or a headlight of the target vehicle,
- an activation of a turn indicator of the target vehicle,
- an activation of a hazard light of the target vehicle,
- an activation of a reverse light of the target vehicle,
- an activation of a braking light of the target vehicle, and/or
- a steering direction of the target vehicle.

In cases in which the driving state attribute is indicative of a travelling speed of the target vehicle, particularly a decreasing travelling speed of the target vehicle may hint towards an intention of the target vehicle and/or the driver of the target vehicle to perform a U-turn. This is due to the fact that a target vehicle usually decreases travelling speed as a preparation for a U-turn. If a taillight and/or headlight of the target vehicle is activated, this indicates that the target vehicle is powered on. If the target vehicle is powered on and standing at a side of the road, this may indicate that the target vehicle may plan to perform a U-turn. In contrast thereto, a taillight and/or headlight of a parked vehicle is usually not activated. A parked target vehicle usually does not plan to make a U-turn. In case one of the turn indicators of the target vehicle are activated, this may indicate both that the target vehicle may plan to perform a U-turn or may not plan to perform a U-turn. If the target vehicle travels on the very right lane in a country with right-hand traffic and the right turning indicator is activated, this is understood to indicate that the target vehicle is not planning to perform a U-turn. Similarly, if the target vehicle travels on the very left lane in a country with left-hand traffic and the left turning indicator is activated, this is also understood to indicate that the target vehicle is not planning to perform a U-turn. In any other case, the activation of a turning indicator may be understood to indicate that the target vehicle may be planning to perform a U-turn. If a hazard light of the target vehicle is activated, this may indicate that the target vehicle is about to stop, for example to drop off an occupant or due to a technical defect. Hence, the target vehicle may not plan to perform a U-turn. If a reverse light of the target vehicle is activated, this may indicate that the target vehicle and/or the driver of the target vehicle does not plan to perform a U-turn. Instead, this may indicate that the target vehicle and/or the driver of the target vehicle may be about to park the target vehicle. If a braking light of the target vehicle is activated, this may indicate that a travelling speed of the target vehicle is being reduced. This may indicate that the target vehicle and/or a driver of the target vehicle may plan to perform a U-turn. A steering direction of the target vehicle can be obtained from a view of the target vehicle acquired by a camera of the ego-vehicle. In particular, an aspect ratio of a side area of a steered wheel of the target vehicle can be compared to an aspect ratio of a side area of a non-steered wheel of the target vehicle. A steered wheel of the target vehicle may for example be determined from a changing aspect ratio of the side area of the respective wheel or simply from the respective wheel being a front wheel of the target vehicle. Additionally, a steering direction of the target vehicle may be deducted if the side area of the steered wheels is not visible. For example, if the ego-vehicle is travelling behind the target vehicle but on a lane left to the target vehicle, the side area of a non-steered wheel of the target vehicle may be visible from the perspective of the ego-vehicle. The side area of a steered wheel of the target vehicle may not be visible from the perspective of the ego-vehicle. If the steered wheel is a front wheel of the target vehicle, the steering direction of the target vehicle may be understood to be pointing to the right. It is understood that the above-mentioned driving state attributes may be used alone or in combination. In case of a combination, a likelihood may be associated with each specific combination of values of the combination of driving state attributes. According to an example, the combination of driving state attributes may be provided in the form of a table, e.g. a look-up table. Moreover, one or more of the above-mentioned driving state attributes may be used to exclude a likelihood that the target vehicle is planning to perform a U-turn. Alternatively, some of the above-mentioned driving state attributes may be associated with a rather low likelihood that the target vehicle is planning to perform a U-turn. Based on one or more of the above-mentioned driving state attribute, a driving state or driving behavior of the target vehicle may be reliably described such that a likelihood that the target vehicle is planning to perform a U-turn may be reliably based on the driving state attribute.

In the context of the steering direction of the target vehicle, the same considerations regarding the planning of the target vehicle and/or the driver of the target vehicle as outlined in this paragraph with respect to turn indicators apply.

In an example, the second data is indicative of one or more of:
- an obstacle for the target vehicle,
- a lane marking of a road on which the target vehicle is travelling,
- a width and course of a lane of the road on which the target vehicle is travelling,
- a space adjacent to a road on which the target vehicle is travelling,
- a barrier between lanes of opposite orientation of the road on which the target vehicle is travelling,
- a road sign associated with the environment,
- a vehicle travelling on the same road as the target vehicle but on a different lane.

An obstacle for the target vehicle may for example be a speed bump, a pothole, a person, an animal, another vehicle, a traffic jam or the like in front of the target vehicle. In case of an obstacle in front of the target vehicle, a driving behavior of the target vehicle, e.g. as described by a driving state attribute, may be seen to be due to the obstacle in front of the target vehicle and not due to the fact that the target vehicle is planning to perform a U-turn. In the context of road traffic, lane markings are either a solid line, indicating that it is not allowed to cross the respective lane marking, or a dashed or broken line, indicating that it is allowed to cross the respective lane marking. If there is a dashed or broken line as lane marking ahead of the target vehicle, the possibility for the target vehicle to perform a U-turn is higher than if a solid line is used. This is because the target vehicle and/or the driver of the target vehicle would break traffic rules when performing a U-turn despite of a solid line used as a lane marking. If the lane of the road on which the target vehicle is travelling is wide, the possibility for the target vehicle to perform a U-turn is higher than if the lane of the road on which the target vehicle is travelling is narrow. This is due to the amount of space that is available for the target vehicle for performing the U-turn. If a course of the lane of the road on which the target vehicle is travelling is straight, the possibility for the target vehicle to perform a U-turn is higher than if the course of the lane of the road on which the target vehicle is travelling is curved. This is due to a better view of the oncoming traffic from a perspective of the target vehicle in case of a straight road lane. A space adjacent to the road on which the target vehicle is travelling may also increase the likelihood of the target vehicle to perform a U-turn. This is due to the additional space that is available to the target vehicle for performing the U-turn. If there is a barrier between lanes of opposite orientation of the road on which the target vehicle is travelling, the possibility for the target vehicle to perform a U-turn is reduced. This is because it is usually not possible for the target vehicle to cross the road barrier when performing a U-turn. Hence, the target vehicle, when trying to perform a U-turn, can only use the space on the side of the road barrier on which the target vehicle is travelling. The road sign associated with the environment may be a road sign that specifically allows a U-turn or a road sign that prohibits performing a U-turn. In case the road sign allows a U-turn, the likelihood for the target vehicle to perform a U-turn is high. In case the road sign prohibits performing a U-turn, the possibility for the target vehicle to perform a U-turn is lower. However, it is not considered impossible for the target vehicle to perform a U-turn because the target vehicle and/or a driver of the vehicle may disobey the traffic rules. A vehicle travelling on the same road as the target vehicle but on a different lane may reduce the space available for the target vehicle to perform a U-turn. In certain cases, for example when a road comprises only one lane in each driving direction, a vehicle travelling on the same road as the target vehicle but on a different lane may make it impossible for the target vehicle to perform a U-turn. Especially in these cases, the target vehicle may have to reduce its speed or wait at a standstill in order to let pass the vehicle travelling on the different lane before performing a U-turn. Thus, using this second data, the environment of the target vehicle may be described in its relevant aspects. Based thereon, the likelihood that the target vehicle is planning to perform a U-turn may be determined with high reliability.

In an example, obtaining a U-turn indicator comprises one or more of:
- obtaining a width of a space suitable for a U-turn,
- obtaining a distance between the space suitable for a U-turn and the target vehicle,
- obtaining a time needed for the target vehicle to reach the space suitable for a U-turn,
- obtaining a distance between the space suitable for a U-turn and a vehicle travelling on the same road as the target vehicle but on a different lane, and/or
- obtaining a time needed for a vehicle to reach the space suitable for a U-turn, and
   wherein the vehicle is vehicle travelling on the same road as the target vehicle but on a different lane.

Obtaining a width of a space suitable for a U-turn is to be understood is receiving or determining a width of a space suitable for a U-turn at the ego-vehicle. The wider a space suitable for a U-turn, the higher the likelihood for the target vehicle to perform a U-turn. Obtaining the distance between the space suitable for a U-turn and the target vehicle is to be understood as receiving or determining a distance between the space suitable for a U-turn and the target vehicle at the ego-vehicle. If the space suitable for a U-turn lies ahead of the target vehicle or if the target vehicle is located adjacent to the space suitable for a U-turn, it is considered possible for the target vehicle to perform a U-turn. If the space suitable for U-turn lies behind the target vehicle, it is considered impossible for the target vehicle to perform a U-turn. Obtaining a time needed for the target vehicle to reach the space suitable for a U-turn is to be understood as receiving or determining a time needed for the target vehicle to reach the space suitable for a U-turn at the ego-vehicle. The time needed for the target vehicle to reach the space suitable for a U-turn may be compared to the time needed for the ego-vehicle to reach the space suitable for the U-turn. In case a difference between the time needed for the target vehicle to reach the space suitable for a U-turn and the time needed for the ego-vehicle to reach the space suitable for a U-turn is equal or inferior to a predefined time threshold, this may indicate a high likelihood of a crash between the target vehicle and the ego-vehicle. Obtaining a distance between the space suitable for a U-turn and a vehicle travelling on the same road as the target vehicle but on a different lane is to be understood as receiving or determining a distance between the space suitable for a U-turn and a vehicle travelling on the same road as the target vehicle but on a different lane at the ego-vehicle. In case of a difference between the distance between the space suitable for a U-turn and the target vehicle and the distance between the space suitable for U-turn and the vehicle travelling on the same road as the target vehicle but on a different lane is equal or inferior to predefined distance threshold, this may indicate a high likelihood of a crash between the target vehicle and the vehicle travelling on the same road as the target vehicle but on a different lane. Obtaining a time needed for a vehicle to reach the space suitable for U-turn wherein the vehicle is travelling on the same road as the target vehicle but on a different lane is to be understood as receiving or determining a time needed for the vehicle to reach the space suitable for a U-turn at the ego-vehicle. In case of a difference between the time needed for the target vehicle to reach the space suitable for a U-turn and the time needed for the vehicle travelling on the same road as the target vehicle but on different lane to reach the space suitable for U-turn is equal or inferior to the predefined time threshold, this may indicate a high likelihood of a crash between the target vehicle and the vehicle travelling on the same road as the target vehicle but on different lane. Thus, using one or more of the above-mentioned U-turn indicators, a relationship between the target vehicle and the environment of the target vehicle may be described in its relevant aspects. Based thereon, the likelihood that the target vehicle is planning to perform a U-turn may be determined with high reliability.

In an example, the method further comprises:
- obtaining a geometry attribute of the target vehicle based on the first data, and
- determining the likelihood that the target vehicle is planning to perform a U-turn further based on the geometry attribute.

Obtaining a geometry attribute of the target vehicle is to be understood as receiving or determining a geometry attribute of the target vehicle at the ego-vehicle. The geometry attribute of the target vehicle may be a width and/or a length of the target vehicle. The geometry attribute of the target vehicle may be determined from an image of the target vehicle captured by the camera of the ego-vehicle. Alternatively, radar data or lidar data may be used. Alternatively, a make and model of the target vehicle may be determined from the image of the target vehicle captured by the camera of the ego-vehicle. The geometry attribute may then be obtained from a database comprising the geometry attribute for the determined make and model of the target vehicle. The wider or the longer the target vehicle is, the more space it requires to perform a U-turn. The geometry attribute can be compared to the space available for a U-turn. If the space available for a U-turn is sufficient for the target vehicle to perform a U-turn based on the geometry attribute, the likelihood that the target vehicle is planning to perform U-turn is increased. If the space available for U-turn is insufficient for the target vehicle to perform a U-turn based on the geometry attribute, the likelihood that the target vehicle is planning to perform a U-turn is lowered. Hence, the determination of the likelihood that the target vehicle is planning to perform a U-turn can further be based on the geometry attribute. This further enhances the precision of the determination of the likelihood that the target vehicle is planning to perform a U-turn.

In an example, the method further comprises:
- evaluating whether the driving state attribute matches a U-turn possibility as indicated by the U-turn indicator, and
- determining the likelihood that the target vehicle is planning to perform a U-turn further based on the evaluation.

As explained above, the driving state attribute is indicative of a driving behavior of the target vehicle and/or of the driver of the target vehicle. In the present example, it is evaluated whether there is a driving behavior of the target vehicle and/or of the driver of the target vehicle that is compatible with the specific possibility for the target vehicle and/or for the driver of the target vehicle to perform a U-turn as indicated by the U-turn indicator. In other words, it is evaluated whether the driving behavior is suitable for using the possibility for making a U-turn. If so, the likelihood that the target vehicle and/or the driver of the target vehicle is planning to perform a U-turn is high. If not, the likelihood that the target vehicle and/or the driver of the target vehicle is planning to perform a U-turn is low. For example, in cases in which it is not possible or if there is only a low possibility for the target vehicle to perform U-turn but a driving state attribute of the target vehicle obtained at the ego-vehicle hints towards a plan of the target vehicle and/or a driver of the target vehicle to perform a U-turn, the determined likelihood that the target vehicle is planning to perform a U-turn is low. Only in cases in which it is possible for the target vehicle to perform a U-turn and the driving state attribute of the target vehicle obtained at the ego-vehicle indicates a plan that the target vehicle and/or a driver of the target vehicle is planning to perform a U-turn, the determined likelihood that the target vehicle is planning to perform a U-turn is high. Consequently, the precision of the determination of the likelihood that the target vehicle is planning to perform a U-turn is further enhanced.

In an example, the method further comprises:
- receiving third data indicative of an environment of the target vehicle and/or fourth data indicative of a driver of the target vehicle from an observer vehicle, and
- determining the likelihood that the target vehicle is planning to perform a U-turn further based on the third data and/or on the fourth data.

The third data and/or the fourth data may be received following a request from the ego-vehicle. This request may be transmitted directly or indirectly from the ego-vehicle to the observer vehicle. In this context, the type of the third data is identical to the type of the second data as explained above. Hence, the same considerations as explained above for the second data also apply for the third data introduced here. The difference is that the third data is acquired from the perspective of an observer vehicle. The observer vehicle is different from the ego-vehicle and the target vehicle. This has the effect that the environment of the target vehicle is viewed from a different perspective. This has the further effect, that aspects of the environment of the target that are not visible from the perspective of the ego-vehicle may be visible from the perspective of the observer vehicle and, thus, taken into consideration when determining the likelihood that the target vehicle is planning to perform a U-turn. The fourth data is indicative of the driver of the target vehicle and may allow drawing a conclusion from a behavior of the driver of the target vehicle. The behavior of the driver of the target vehicle may indicate that the driver of the target vehicle is aware of the ego-vehicle and/or of the observer vehicle. Since the driver of the target vehicle may not be visible from a perspective of the ego-vehicle, requesting and/or receiving the fourth data from an observer vehicle comes with the advantage, that fourth data indicative of the driver of the target vehicle can be taken into account when determining the likelihood that the target vehicle is planning to perform a U-turn. Altogether, using third data and/or fourth data further enhances the determination of the likelihood that the target vehicle is planning to perform a U-turn.

In an example, the third data is indicative of an obstacle in the environment of the target vehicle. Additionally or alternatively, the fourth data is indicative of a driver's head pose and/or of a driver's eye position. The third data being indicative of an obstacle in the environment of the target vehicle may involve data on obstacles in front of the target vehicle that may be hidden when viewed from the perspective of the ego-vehicle. The same considerations on obstacles in front of the target vehicle as outlined above with respect to the second data also apply to obstacles in front of the target vehicle as described herein with respect to the third data. Therefore, such obstacles can reliably be determined and taken into account in the determination of the U-turn indicator and ultimately into the determination of the likelihood that the target vehicle is planning to perform a U-turn. The driver's head pose and/or the driver's eye position may be indicative of the driver of the target vehicle looking into one of the mirrors of the target vehicle. If the driver of the target vehicle looks into a mirror of the target vehicle, it may be inferred that the driver of the target vehicle is aware of what is happening behind the target vehicle. In particular, the driver of the target vehicle may be aware of another vehicle that is about to overtake the target vehicle. The other vehicle may be the ego-vehicle. If the driver of the target vehicle is aware of another vehicle being about to overtake the target vehicle, the likelihood that the target vehicle and/or the driver of the target vehicle performing a U-turn is low. Thus, the determination of the likelihood that the target vehicle is planning to perform a U-turn is further enhanced.

According to a second aspect, there is provided a method for controlling an ego-vehicle, wherein a target vehicle is located in the surroundings of the ego-vehicle. The method comprises:
- determining a likelihood that the target vehicle is planning to perform a U-turn according to the method of the first aspect, and
- triggering a collision mitigation measure of the ego-vehicle, if the likelihood exceeds a likelihood threshold.

The collision mitigation measure may relate to a driving maneuver to mitigate a collision risk between the ego-vehicle and the target vehicle. The driving maneuver may for example involve stopping an acceleration, breaking and/or a lane change. Additionally or alternatively, the collision mitigation measure may relate to causing the ego-vehicle to provide a warning to the target vehicle. The warning may be an acoustic warning, e.g. provided by a horn of the ego-vehicle, or an optical warning, e.g. provided by flashing lights of the ego-vehicle. Additionally or alternatively, a warning signal may be provided from the ego-vehicle to the target vehicle wirelessly, e.g. in a peer-to-peer connection between the ego-vehicle and the target vehicle or via a cloud server. Upon receipt of the warning signal, the target vehicle may adjust its driving behavior automatically and/or may provide an acoustic and/or optical and/or haptic warning to the driver of the target vehicle. Altogether, the collision mitigation measure enhances road safety.

According to a third aspect, there is provided a method for controlling an observer vehicle, wherein an ego-vehicle and a target vehicle are located in the surroundings of the observer vehicle. The method comprises:
- receiving an assistance request from the ego-vehicle requesting third data indicative of an environment of the target vehicle and/or fourth data indicative of a driver of the target vehicle,
- obtaining third data indicative of an environment of the target vehicle and/or fourth data indicative of a driver of the target vehicle, and
- providing the third data and/or the fourth data to the ego-vehicle.

The assistance request may be received from the ego-vehicle wirelessly in a peer-to-peer connection between the ego-vehicle and the observer vehicle or via a cloud server. Obtaining third data indicative of an environment of the target vehicle and/or fourth data indicative of a driver of the target vehicle is to be understood as receiving or determining the third data and/or the fourth data. The third data and/or fourth data may be acquired by a camera of the observer vehicle. Additionally or alternatively, the third data and/or fourth data may be acquired by a radar system or a lidar system of the observer vehicle. The third data and fourth data have already been explained above in the context of the first aspect. The same considerations on the third data and on the fourth data also apply in the context of the present second aspect. Similar to the obtainment of the assistance request, the third data and/or the fourth data may be provided to the ego-vehicle wirelessly in a peer-to-peer connection between the observer vehicle and the ego-vehicle or via cloud server. Using the third data and/or the fourth data, the ego-vehicle may enhance the determination of the likelihood that the target vehicle is planning to perform a U-turn.

In an example, the method further comprises causing the observer vehicle to perform a collision mitigation maneuver to mitigate a collision risk between the ego-vehicle and the target vehicle. The collision mitigation maneuver may involve an adjustment of the travelling speed of the observer vehicle. If the observer vehicle is travelling on the same road as the target vehicle but on a different lane, the observer vehicle may reduce the space available for the target vehicle to perform a U-turn. In certain cases, for example if a road comprises only one lane in each driving direction, an observer vehicle travelling on the same road as the target vehicle but on a different lane may make it impossible for the target vehicle to perform a U-turn. If the fourth data hints towards the driver of the target vehicle being unaware of the ego-vehicle, for example because the driver of the target vehicle has been determined to have had his or her eyes only on the observer vehicle, the observer vehicle may reduce the space available for a U-turn or even make it impossible for the target vehicle to perform a U-turn. The target vehicle may then have to reduce its speed or wait at a standstill in order to let the observer vehicle pass before performing a U-turn. Thereby, the U-turn that the target vehicle plans to perform is delayed. This may have the effect that the ego-vehicle can overtake the target vehicle without the target vehicle performing a U-turn at the same time. Consequently, a collision between the ego-vehicle and the target vehicle can be avoided. Additionally or alternatively, the collision mitigation measure may relate to causing the observer vehicle to provide a warning to the target vehicle. The warning may be an acoustic warning, e.g. provided by a horn of the ego-vehicle, or an optical warning, e.g. provided by flashing lights of the observer vehicle. Additionally or alternatively, a warning signal may be provided from the observer vehicle to the target vehicle wirelessly, e.g. in a peer-to-peer connection between the observer vehicle and the target vehicle or via a cloud server. Upon receipt of the warning signal, the target vehicle may adjust its driving behavior automatically and/or may provide an acoustic and/or optical and/or haptic warning to the driver of the target vehicle. Altogether, the collision mitigation measure enhances road safety.

According to a fourth aspect, there is provided a data processing apparatus comprising means for carrying out the method of the first aspect, the method of the second aspect and/or the method of the third aspect. Thus, the data processing apparatus may be configured to carry out all of the method of the first aspect, the method of the second aspect and the method of the third aspect. Alternatively, the data processing apparatus may be configured to carry out any pair of the method of the first aspect, the method of the second aspect and the method of the third aspect. According to still a further alternative, the data processing apparatus is configured to carry out one of the method of the first aspect, the method of the second aspect and the method of the third aspect. The data processing apparatus may be attached to our housed in the ego-vehicle and/or in the observer vehicle. Alternatively, the data processing apparatus may be provided remote from the ego-vehicle and the observer vehicle, in this case, the data processing apparatus has a data connection to the ego-vehicle and/or the observer vehicle. Hence, the data processing apparatus puts the ego-vehicle in a position so that the method according to the first aspect and/or the method of the second aspect can be executed from its perspective. Also, the data processing apparatus puts the observer vehicle in a position so that the method according to the third aspect can be executed from the perspective of the observer vehicle. This enhances road safety.

According to a fifth aspect, there is provided a computer program comprising instructions which, when the computer program is executed by a computer, cause the computer to carry out the method of the first aspect, the method of the second aspect and/or the method of the third aspect. Thus, the computer program may be configured to cause the computer to carry out all of the method of the first aspect, the method of the second aspect and the method of the third aspect. Alternatively, the computer program may be configured to cause the computer to carry out any pair of the method of the first aspect, the method of the second aspect and the method of the third aspect. According to still a further alternative, the computer program is configured to cause the computer to carry out one of the method of the first aspect, the method of the second aspect and the method of the third aspect. Using such a computer program, a determination of a likelihood that a target vehicle is planning to perform a U-turn may be executed in a reliable manner. Having an information available indicating the likelihood that a target vehicle is planning to perform a U-turn enhances road safety since other traffic participants, e.g. the ego-vehicle and/or the observer vehicle are able to adapt to this.

According to a sixth aspect, there is provided a computer-readable storage medium comprising instructions which, when executed by a computer, cause the computer to carry out the method of the first aspect, the method of the second aspect and/or the method of the third aspect. Thus, the computer-readable storage medium may be configured to cause the computer to carry out all of the method of the first aspect, the method of the second aspect and the method of the third aspect. Alternatively, the computer-readable storage medium may be configured to cause the computer to carry out any pair of the method of the first aspect, the method of the second aspect and the method of the third aspect. According to still a further alternative, the computer-readable storage medium is configured to cause the computer to carry out one of the method of the first aspect, the method of the second aspect and the method of the third aspect. Using such a computer-readable storage medium, a determination of a likelihood that a target vehicle is planning to perform a U-turn may be executed in a reliable manner. Having an information available indicating the likelihood that a target vehicle is planning to perform a U-turn enhances road safety since other traffic participants, e.g. the ego-vehicle and/or the observer vehicle are able to adapt to this.

According to a seventh aspect, there is provided a system for determining a likelihood that a target vehicle is planning to perform a U-turn. The system comprises a data processing apparatus comprising means for carrying out the method of the first aspect and/or a data processing apparatus comprising means for carrying out the method of the second aspect and/or a data processing apparatus comprising means for carrying out the method of the third aspect. Having such a system in place allows determining a likelihood that a target vehicle is planning to perform a U-turn in a reliable manner. Having an information available indicating the likelihood that a target vehicle is planning to perform a U-turn enhances road safety since other traffic participants, e.g. the ego-vehicle and/or the observer vehicle are able to adapt to this.

The method of the first aspect, the method of the second aspect and/or the method of the third aspect may be at least partly computer-implemented, and may be implemented in software or in hardware, or in software and hardware. Further, the method of the first aspect, the method of the second aspect and/or the method of the third aspect may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an ego-vehicle comprising a data processing apparatus for executing a method according to the present disclosure for determining a likelihood that a target vehicle is planning to perform a U-turn and for executing a method according to the present disclosure for controlling an ego-vehicle,
- Figure 2: shows an observer vehicle comprising a data processing apparatus for executing a method according to the present disclosure for controlling an observer vehicle,
- Figure 3: shows a system according to the present disclosure for determining a likelihood that a target vehicle is planning to perform a U-turn,
- Figure 4a: shows a first traffic scenario in which the ego-vehicle of Figure 1 determines a high likelihood that the target vehicle is planning to perform a U-turn,
- Figure 4b: shows a detection result of a side area of a wheel of the target vehicle from a perspective of the ego-vehicle in Figure 4a,
- Figure 5a: shows a second traffic scenario in which the ego-vehicle of Figure 1 determines a low likelihood that the target vehicle is planning to perform a U-turn,
- Figure 5b: shows a detection result of a side area of a wheel of the target vehicle from a perspective of the ego-vehicle in Figure 5a,
- Figure 6: shows a third traffic scenario in which the ego-vehicle of Figure 1 determines that a space available for a U-turn is too narrow for the target vehicle to perform a U-turn,
- Figure 7: shows a fourth traffic scenario in which the ego-vehicle of Figure 1 determines that the target vehicle is too long to perform a U-turn given the available width of the space available for a U-turn,
- Figure 8a: shows a first stage of a fifth traffic scenario in which the ego-vehicle of Figure 1 obtains a distance between the space suitable for a U-turn and the target vehicle,
- Figure 8b: shows a second stage of a fifth traffic scenario in which the ego-vehicle of Figure 1 obtains a distance between the space suitable for a U-turn and the target vehicle,
- Figure 8c: shows a third stage of a fifth traffic scenario in which the ego-vehicle of Figure 1 obtains a distance between the space suitable for a U-turn and the target vehicle,
- Figure 9: shows a sixth traffic scenario in which the ego-vehicle of Figure 1 obtains second data indicative of an obstacle for the target vehicle,
- Figure 10: shows a seventh traffic scenario in which the observer vehicle of Figure 2 obtains third data indicative of an environment of the target vehicle,
- Figure 11a: shows a first stage of an eighth traffic scenario in which the observer vehicle of Figure 2 obtains fourth data indicative of a driver of the target vehicle and in which the observer vehicle performs a collision mitigation maneuver to mitigate a collision risk between the ego-vehicle of Figure 1 and the target vehicle,

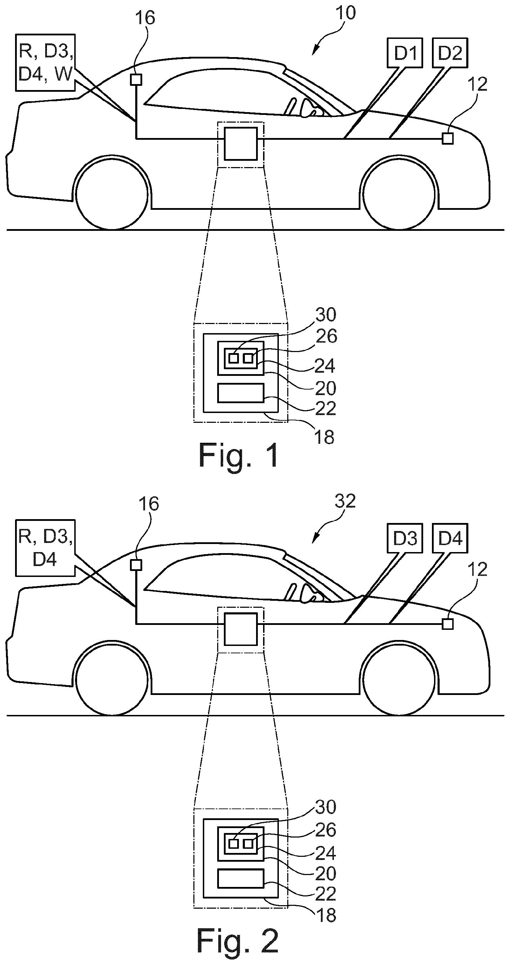

- Figure 1 1b: shows a second stage of an eighth traffic scenario in which the observer vehicle of Figure 2 obtains fourth data indicative of a driver of the target vehicle and in which the observer vehicle performs a collision mitigation maneuver to mitigate a collision risk between the ego-vehicle of Figure 1 and the target vehicle,

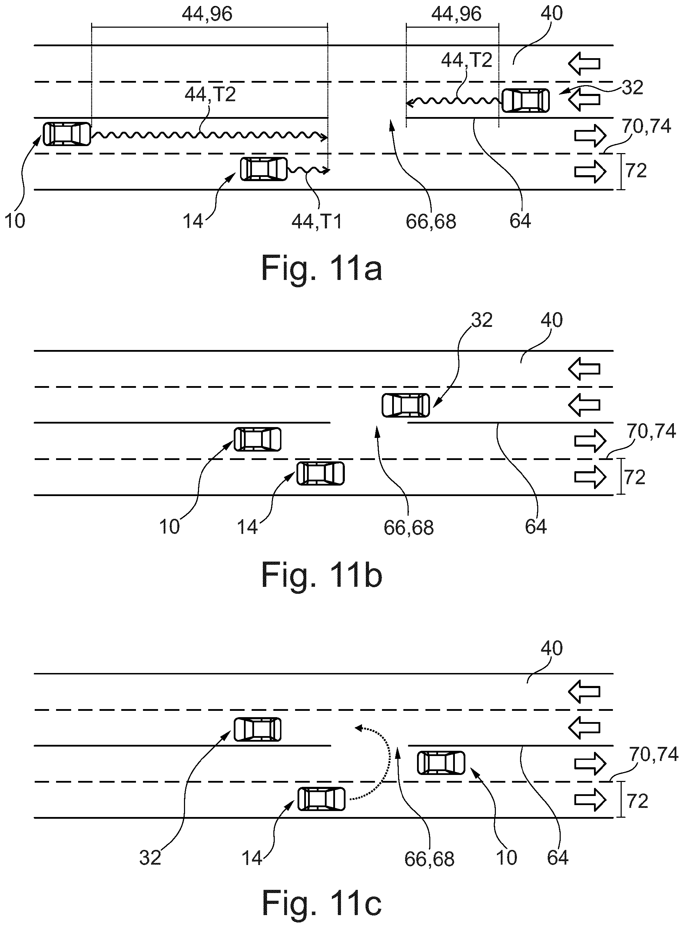

- Figure 11c: shows a third stage of an eighth traffic scenario in which the observer vehicle of Figure 2 obtains fourth data indicative of a driver of the target vehicle and in which the observer vehicle performs a collision mitigation maneuver to mitigate a collision risk between the ego-vehicle of Figure 1 and the target vehicle,

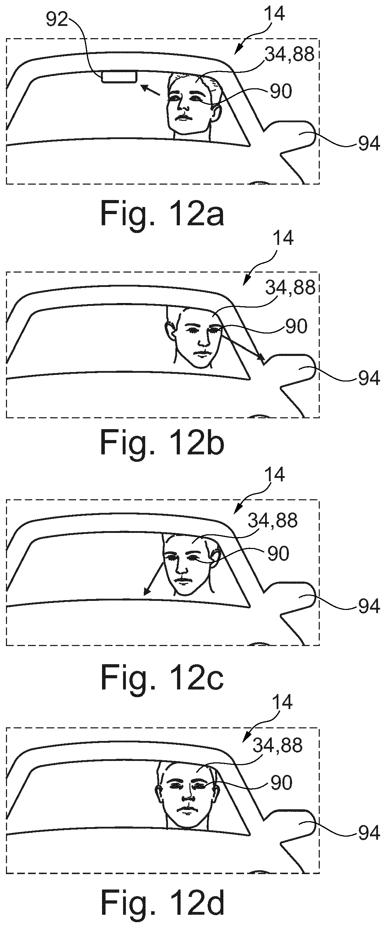

- Figures 12a: illustrates a first example of fourth data obtained by the observer vehicle in the eighth traffic scenario of Figures 11a to 11c,
- Figures 12b: illustrates a second example of fourth data obtained by the observer vehicle in the eighth traffic scenario of Figures 11a to 11c,
- Figures 12c: illustrates a third example of fourth data obtained by the observer vehicle in the eighth traffic scenario of Figures 11a to 11c,
- Figures 12d: illustrates a fourth example of fourth data obtained by the observer vehicle in the eighth traffic scenario of Figures 11a to 11c,

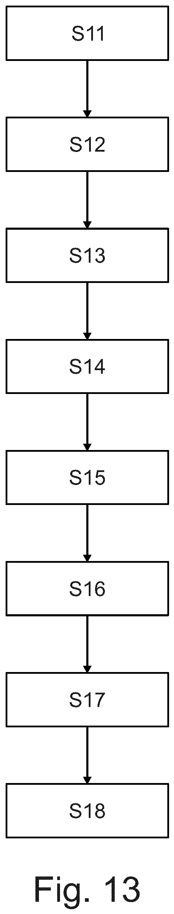

- Figure 13: schematically shows steps of the method according to the present disclosure for determining a likelihood that a target vehicle is planning to perform a U-turn,

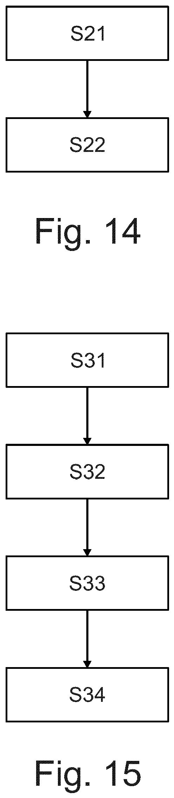

- Figure 14: schematically shows steps of the method according to the present disclosure for controlling an observer vehicle, and
- Figure 15: schematically shows steps of the third method according to the present disclosure for controlling an observer vehicle.

### DETAILED DESCRIPTION

The Figures are merely schematic representations and serve only to illustrate examples of the disclosure. Identical or equivalent elements are in principle provided with the same reference signs.

Figure 1 shows an ego-vehicle 10.

The ego-vehicle 10 comprises an environment detection sensor 12 for providing first data D1 indicative of a target vehicle 14 and second data D2 indicative of an environment of the target vehicle 14.

In the present example, the environment detection sensor 12 comprises an optical camera. Thus, the first data D1 and the second data D2 may be an image and/or a video sequence comprising a representation of the target vehicle 14 or a representation of the environment of the target vehicle 14, respectively.

Alternatively, the environment detection sensor 12 may comprise a radar unit that is situated in the front of the ego-vehicle 10 or a lidar unit that is situated in the front of the ego-vehicle 10.

Of course, there may be multiple environment detection sensors 12 in the ego-vehicle 10, which may also be situated in the rear or at the sides of the ego-vehicle 10. However, for the ease of representation, only one environment detection sensor 12 is shown in the ego-vehicle 10 of Figure 1.

The ego-vehicle 10 also comprises a communication interface 16.

The communication interface 16 may be a loudspeaker, a light such as a warning light, headlights of the ego-vehicle, the horn of the ego-vehicle or an electromagnetic communication means such as an antenna for Bluetooth, Wi-Fi or mobile communications. In Figure 1, the communication interface 16 is only represented schematically.

Furthermore, the ego-vehicle 10 comprises a data processing apparatus 18.

The data processing apparatus 18 is communicatively connected to the environment detection sensor 12 and to the communication interface 16.

The data processing apparatus 18 comprises a data storage unit 20 and data processing unit 22.

The data storage unit 20 comprises a computer-readable storage medium 24.

On the computer-readable storage medium 24, there is provided a computer program 30.

The computer program 30 and, thus, also the computer-readable storage medium 24, comprise instructions which, when executed by the data processing unit 22, or, more generally speaking, a computer, cause the computer or the data processing unit 22 to carry out a method for determining a likelihood that a target vehicle 14 is planning to perform a U-turn and a method for controlling the ego-vehicle 10. The method for determining a likelihood that a target vehicle 14 is planning to perform a U-turn may be called a first method and the method for controlling the ego-vehicle 10 may be called a second method.

Consequently, the data storage unit 20 and the data processing unit 22 form means for carrying out the method for determining a likelihood that a target vehicle 14 is planning to perform a U-turn and for carrying out the method for controlling the ego-vehicle 10.

As will be described in more detail further below, the first method forms part of the second method.

Figure 2 shows an observer vehicle 32.

Like the ego-vehicle 10, the observer vehicle 32 comprises an environment detection sensor 12, a communication interface 16 and a data processing apparatus 18.

The functionalities of the environment detection sensor 12, of the communication interface 16 and of the data processing apparatus 18 of the observer vehicle 32 correspond to the functionalities of the respective components of the ego-vehicle 10. This is why a detailed description of functionalities of said components of the observer vehicle 32 will be omitted at this point. Instead, only the differences between the components of the observer vehicle 32 and the components of the ego-vehicle 10 will be explained.

The environment detection sensor 12 of the observer vehicle 32 is configured to provide third data D3 indicative of an environment of the target vehicle 14 and fourth data D4 indicative of a driver 34 of the target vehicle 14.

The third data D3 and the fourth data D4 may comprise an image and/or a video sequence of the environment of the target vehicle 14 or of a driver 34 of the target vehicle 14, respectively.

The computer program 30 on the data processing apparatus 18 of the observer vehicle 32 and, thus, also the computer-readable storage medium 24 on the data processing apparatus 18 of the observer vehicle 32, comprise instructions which, when executed by the data processing unit 22, or, more generally speaking, a computer, cause the computer or the data processing unit 22 to carry out a method for controlling the observer vehicle 32. The method for controlling the observer vehicle 32 may also be called a third method.

Consequently, the data storage unit 20 and the data processing unit 22 of the data processing apparatus 18 as provided in the observer vehicle 32 form means for carrying out the method for controlling the observer vehicle 32.

The method for controlling the observer vehicle 32 will be described in more detail further below.

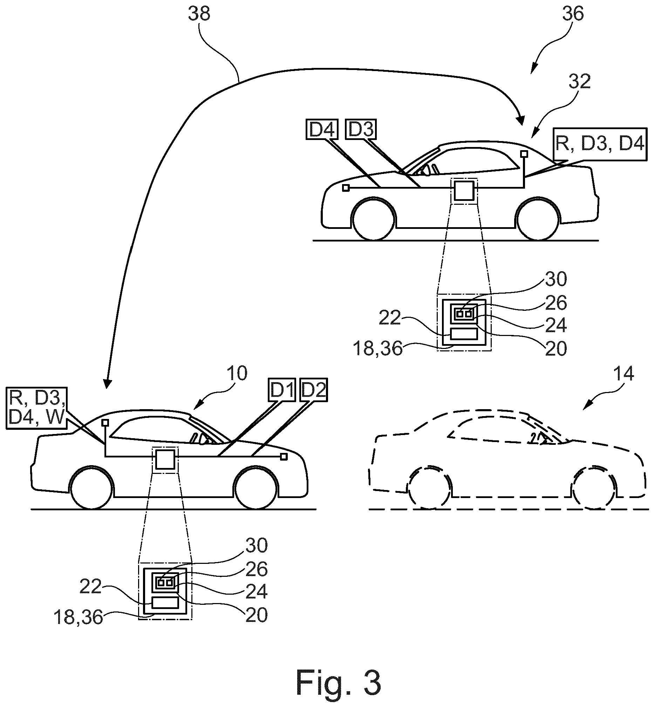

Figure 3 shows a system 36 for determining a likelihood that the target vehicle 14 is planning to perform a U-turn.

The system 36 comprises the data processing apparatus 18 of the ego-vehicle 10 and the data processing apparatus 18 of the observer vehicle 32. Since the target vehicle 14 does not form part of the system 36, it is represented in dashed lines.

In the present example, the data processing apparatus 18 of the ego-vehicle 10 is configured to execute the method for determining a likelihood that a target vehicle 14 is planning to perform a U-turn, i.e. the first method, and the method for controlling the ego-vehicle 10, i.e. the second method. The data processing apparatus 18 of the observer vehicle 32 is configured to execute the method for controlling the observer vehicle 32, i.e. the third method.

The data processing apparatus 18 of the ego-vehicle 10 and the data processing apparatus 18 of the observer vehicle 32 exchange data via a data link 38 between the communication interface 16 of the ego-vehicle 10 and the communication interface 16 of the observer vehicle 32.

The data link 38 can be a direct peer to peer link between the communication interface 16 of the ego-vehicle 10 and the communication interface 16 of the observer vehicle 32 (as drawn in Figure 3).

However, the data link 38 may also be realized in an indirect way, i.e. via an intermediate cloud server (not shown).

In the following, the first method, the second method and the third method will be explained with reference to different traffic scenarios.

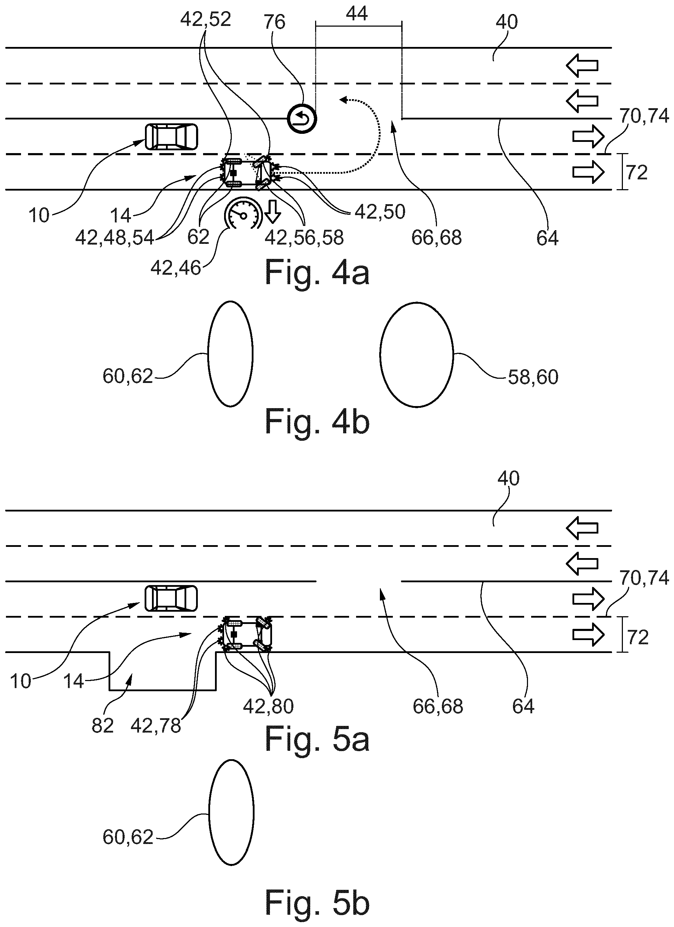

Figures 4a and 4b show a first traffic scenario.

In Figure 4a, the target vehicle 14 is travelling on a road 40.

The ego-vehicle 10 is travelling on the same road 40 and in the same direction as the target vehicle 14 but on a different lane and slightly behind the target vehicle 14.

If the target vehicle 14 performed an abrupt U-turn, there would be a significant risk for the ego-vehicle 10 to crash into the target vehicle 14.

To mitigate this collision risk, the data processing apparatus 18 of the ego-vehicle 10 performs the first method, i.e. the method for determining a likelihood that the target vehicle 14 is planning to perform a U-turn and the second method, i.e. the method for controlling the ego-vehicle 10.

The steps of the first method are schematically shown in Figure 13.

Step S11 comprises obtaining first data D1 indicative of the target vehicle 14.

Step S12 comprises obtaining at least one driving state attribute 42 of the target vehicle 14 based on the first data D1.

Step S13 comprises obtaining second data D2 indicative of an environment of the target vehicle 14.

Step S14 comprises obtaining a U-turn indicator 44 indicative of a possibility of the target vehicle 14 to perform a U-turn in the environment based on the second data D2.

The steps S15 to S 17 are optional steps and will be explained further below.

Step S18 comprises determining the likelihood that the target vehicle 14 is planning to perform a U-turn at least based on the at least one driving state attribute 42 and the U-turn indicator 44.

The steps of the second method are schematically shown in Figure 14.

Step S21 comprises executing the first method, i.e. the method for determining the likelihood that a target vehicle 14 is planning perform a U-turn.

Step S22 comprises triggering a collision mitigation measure of the ego-vehicle 10, if the likelihood that the target vehicle 14 is planning to perform a U-turn exceeds a likelihood threshold.

The collision mitigation measure may comprise providing a warning W to the target vehicle 14 and/or a driver 34 of the target vehicle 14. The warning W may be an acoustic signal, for example honking, or an optical signal, for example flashing headlights. The warning W may also comprise a signal that triggers the target vehicle to abort or delay its plan for performing a U-turn, if the target vehicle 14 is an autonomous vehicle.

The collision mitigation measure may also comprise an adjustment of the travelling speed 46 of the ego-vehicle 10 and/or a lane change of the ego-vehicle 10.

Coming back to the traffic scenario of Figure 4a, the data processing apparatus 18 of the ego-vehicle 10 carries out the first method and the second method.

First data D 1 of the target vehicle 14 is obtained through the environment detection sensor 12 of the ego-vehicle 10.

In the present example, the driving state attribute 42 describes a travelling speed 46 of the target vehicle 14, more precisely a course of the travelling speed 46 over time. The travelling speed 46, i.e. the driving state attribute 42, is determined from the first data D1, e.g. by evaluating one or more video sequences and/or by evaluating a sequence of images. In the present example, the target vehicle 14 is found to reduce its travelling speed 46. This is a potential hint towards a plan of the target vehicle 14 to perform a U-turn.

Further examples of driving state attributes 42 that may hint towards a plan of the target vehicle 14 to perform a U-turn are also represented into Figure 4a.

These further examples include the detection of an activated taillight 48 and/or an activated headlight 50 of the target vehicle 14. If the taillight 48 and/or the headlight 50 of the target vehicle 14 are activated, this means that the target vehicle 14 is powered on. Therefore, the target vehicle 14 can potentially initiate a U-turn.

If the taillight 48 and/or the headlight 50 of the target vehicle 14 are not activated but the visibility conditions would require so, e.g. due to darkness at night, it is inferred that the target vehicle 14 is powered off and cannot immediately initiate a U-turn.

Another example of a driving state attribute 42 is an activation state of a turn indicator 52 of the target vehicle 14. In Figure 4a, the turn indicator 52 to the left is activated. This is a further hint that the target vehicle 14 is planning to perform a U-turn.

If the turn indicator 52 to the right was activated, this would be a hint that the target vehicle 14 is not planning to perform a U-turn.

A further example of a driving state attribute 42 is an activation state of a braking light 54 of the target vehicle 14. An activated braking light 54 may indicate that the travelling speed 46 of the target vehicle 14 is being reduced. This may also be seen as a hint that the target vehicle 14 is planning to perform a U-turn.

The driving state attribute 42 may also be indicative of a steering direction 56 of the target vehicle 14.

As shown in Figure 4a, front wheels 58 of the target vehicle 14 are turned to the left. This indicates that the target vehicle 14 is going to move to the left, as seen in travelling direction. This may be seen as a hint that the target vehicle 14 is planning to perform a U-turn.

The steering direction 56 of the target vehicle may be obtained by the data processing apparatus 18 of the ego-vehicle 10 through a comparison of side areas 60 of wheels that are visible from the perspective of the ego-vehicle 10, especially from the perspective of the environment detection sensor 12 of the ego-vehicle 10.

In Figure 4b, the side areas 60 of the wheels of the target vehicle 14 from Figure 4a are represented schematically. It can be seen that the representation of the side area 60 of a rear wheel 62 of the target vehicle 14 on the left of Figure 4b appears narrower than the representation of the side area 60 of a front wheel 58 of the target vehicle 14 on the right of Figure 4b. Due to the position of the ego-vehicle 10 with respect to the target vehicle 14 in Figure 4a, it can be inferred from the aspect ratios of the schematic representations of the side areas 60 of the wheels of the target vehicle 14 that the steering direction 56 of the target vehicle 14 in Figure 4a is pointing to the left.

The environment detection sensor 12 of the ego-vehicle 10 also obtains second data D2 indicative of an environment of the target vehicle 14.

In the exemplary traffic scenario of Figure 4a, the second data D2 is indicative of a barrier 64 between lanes of opposite of orientation of the road 40 on which the target vehicle 14 is travelling. It can be seen that the barrier 64 between lanes of opposite orientation comprises a gap 66. The gap 66 in the barrier 64 constitutes a space 68 potentially suitable for a U-turn.

The data processing apparatus 18 of the ego-vehicle 10 obtains a U-turn indicator 44 from the second data D2, i.e. the U-turn indicator 44 is derived from the second data D2.

In the present example of Figure 4a, the U-turn indicator 44 is indicative of the width of the space 68 available for a U-turn. For the present example, it shall be assumed that the width of the gap 66 in the barrier 64 between lanes of opposite orientation is above a predefined width threshold. Therefore, it is determined that the gap 66 would be suitable for a U-turn.

In another example, the second data D2 may be indicative of a lane marking 70 of the road 40 on which the target vehicle 14 is travelling. The lane marking 70 can be broken, which may indicate that a space 68 may be suitable for a U-turn for the target vehicle 14.

The lane marking 70 on the road 40 on which the target vehicle 14 is travelling could also be a solid line. This would indicate that the target vehicle 14 must not cross that line.

The second data D2 may also be indicative of a width 72 and course 74 of the lanes of the road 40 on which the target vehicle 14 is travelling.

The wider the lanes of the road 40 on which target vehicle 14 is travelling, the more space 68 there is available for the target vehicle 14 to perform a U-turn.

The narrower the lanes of the road 40 on which the target vehicle is travelling, the less space 68 there is available for the target vehicle 14 to perform a U-turn.

If the lanes of the road 40 on which the target vehicle 14 is travelling are straight, the target vehicle 40 and/or the driver 34 of the target vehicle 14 may have a good view of oncoming traffic.

If the lanes of the road on which the target vehicle 14 is travelling are curved, the target vehicle 14 and/or the driver 34 of the target vehicle 14 may have an obstructed view of oncoming traffic.

The second data D2 may also be indicative of a road sign 76 associated with the environment.

In Figure 4a, a road sign 76 prohibiting a U-turn is shown. Thus, when performing a U-turn, the target vehicle 14 would act against the traffic rule imposed by road sign 76. However, the target vehicle 14 and/or the driver 34 of the target vehicle 14 may disobey the traffic rules or overlook the road sign 76 and still perform a U-turn.

Based on the second data D2, the U-turn indicator 44 is determined. As has been mentioned before, the U-turn indicator 44 is indicative of a possibility of the target vehicle 14 to perform a U-turn in the environment.

In the present example, the possibility of the target vehicle 14 to perform a U-turn is confirmed if the gap 66 in the barrier 64 is found to be large enough for the target vehicle 14 to pass, if the lane marking 70 comprises a broken line, if the width 72 is large enough to allow for a U-turn of the target vehicle 14, if the lanes of the road 40 are straight, and if there is no road sign 76 forbidding a U-turn.

Otherwise, the possibility of the target vehicle 14 to perform a U-turn is negated if the gap 66 in the barrier 64 is found to be too small for the target vehicle 14 to pass or non-existent, if the lane marking 70 comprises a solid line, if the width 72 is too narrow to allow for a U-turn of the target vehicle 14, if the lanes of the road 40 are curved, and if there is a road sign 76 forbidding a U-turn.

Subsequently, the likelihood that the target vehicle 14 is planning to perform a U-turn is determined based on the at least one driving state attribute 42 and the U-turn indicator 44.

In the present examples, the likelihood is expressed in one out of two likelihood categories, wherein one likelihood category relates to a high likelihood and one out of the two likelihood categories relates to a low likelihood.

In a case in which the U-turn indicator 44 negates the possibility to perform a U-turn, the likelihood is automatically low.

In a case in which the U-turn indicator 44 confirms the possibility to perform a U-turn, the driving state attributes 42 are considered.

In the present case, a high likelihood is determined, if the driving state attributes 42 indicate that the travelling speed 46 is found to be reduced, if a taillight is activated, if a turn indicator 52 is activated pointing towards the direction of the gap 66, if a braking light 54 is activated and if a steering direction points into the direction of the gap 66.

A low likelihood is determined, if the driving state attributes 42 does not indicate that the travelling speed 46 is reduced, if a taillight is deactivated, if a turn indicator 52 pointing towards the direction of the gap 66 is deactivated, if a braking light 54 is deactivated or if a steering direction does not point into the direction of the gap 66.

With reference to Figure 5a, another traffic scenario will be explained.

In the exemplary traffic scenario Figure 5a, an activated reverse light 78 of the target vehicle 14 is determined as a driving state attribute 42. This indicates that the target vehicle 14 is or is about to be driving in reverse gear. In the present example, this is associated with a low likelihood of the target vehicle 14 to be planning to perform a U-turn.

Another example of a driving state attribute 42 is also shown in Figure 5a. It is an activated hazard light 80 of the target vehicle 14. This may indicate that the target vehicle 14 has suffered a breakdown or is planning to drop off a passenger. This is also associated with a low likelihood that the target vehicle 14 is planning to perform a U-turn.

Moreover, the data processing apparatus 18 of the ego-vehicle 10 in the traffic scenario of Figure 5a may detect that the steering direction 56 of the front wheels 58 of the target vehicle 14 is pointing to the right, i.e. away from the gap 66. This is also associated with a low likelihood that the target vehicle 14 is planning to perform a U-turn.

As has already been explained in connection with Figure 4b, the steering direction 56 can be inferred from the side area 60 of the wheels of the target vehicle 14 visible to the ego-vehicle 10, more specifically visible to the environment detection sensor 12 of the ego-vehicle 10. As shown in Figure 5b, only a side area 60 of the rear wheel 62 of the target vehicle 14 is visible to the environment detection sensor 12 of the ego-vehicle 10. The side area 60 of a front wheel 58 of the target vehicle 14 is not visible to the environment detection sensor 12 of the ego-vehicle 10.

Given the relative position of the ego-vehicle 10 to the target vehicle 14 in Figure 5a, this indicates a steering direction 56 of the front wheels 58 of the target vehicle 14 to the right.

In the scenario of Figure 5a, the second data D2 also comprises a representation of a space 82 adjacent to the road on which the target vehicle 14 is travelling. Together with the activated reverse light 78 and the steering direction 56 of the target vehicle 14 to the right, it appears that the target vehicle 14 of Figure 5a is planning to park in the space 82 adjacent to the road. Hence, the likelihood that the target vehicle 14 is planning to perform a U-turn is determined to be low.

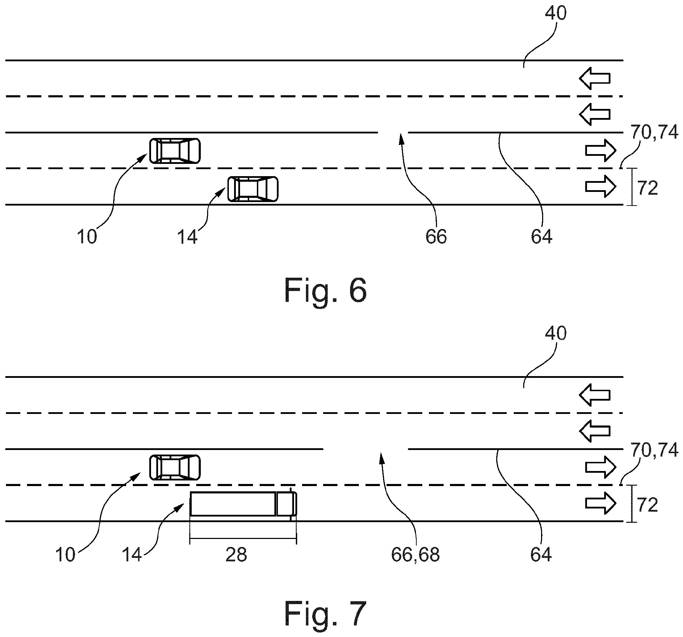

Figure 6 shows another traffic scenario in which the likelihood that the target vehicle 14 is planning to perform U-turn is low.

The data processing apparatus 18 of the ego-vehicle 10 obtains second data D2 indicative of the barrier 64 between lanes of opposite orientation of the road 40 on which the target vehicle 14 travelling. The barrier 64 between lanes of opposite orientation shows a gap 66. Hence, the gap 66 could be a space 68 suitable for a U-turn.

The U-turn indicator 44 obtained from the second data D2 however indicates that the width of the gap 66 in the barrier 64 is below a predefined width threshold. This is why the likelihood that the target vehicle 14 is planning to perform a U-turn is low.

In Figure 7, a gap 66 in the barrier 64 between lanes of opposite orientation having the same width as the gap 66 in the barrier 64 between lanes of opposite orientation as in Figures 4a and 5a is shown.

However, in the traffic scenario of Figure 7, the optional step S15 of the first method is executed. Step S15 comprises obtaining a geometry attribute 28 of the target vehicle 14 based on the first data D1.

From the first data D1 indicative of the target vehicle 14, the length of the target vehicle 14 is obtained. In the present example, the length of the target vehicle 14 is obtained directly from the first data D1.

However, in other examples, make and model of the target vehicle 14 can be obtained from the first data D 1. A geometry attribute 28 of the target vehicle 14 can then be determined from a look-up table 26 on the computer-readable storage medium 24 of the data processing apparatus 18 of the ego-vehicle 10 comprising geometry attributes 28 of a plurality of makes and models of vehicles. Additionally or alternatively, geometry attributes 28 can be obtained from a cloud server depending on a determined make and model of the target vehicle 14.

Due to the length of the target vehicle 14, the width of the gap 66 in the barrier 64 between lanes of different orientations is not sufficient for the target vehicle 14 to perform a U-turn. Hence, the likelihood that the target vehicle 14 is planning to perform a U-turn is determined to be low.

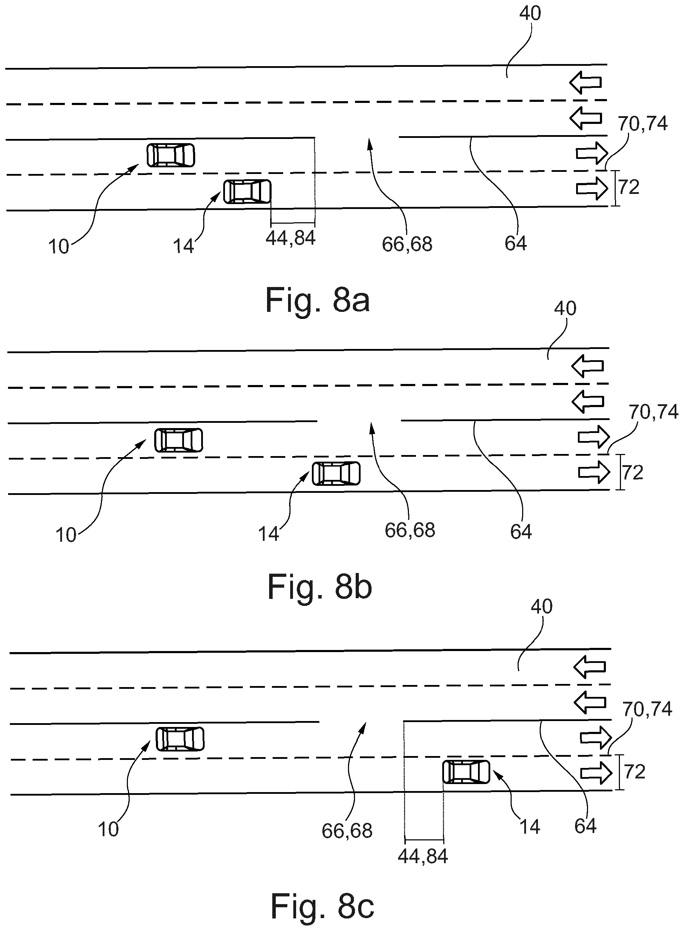

With reference to Figures 8a to 8c, three stages of a further traffic scenario will be explained. Due to the similarity to the traffic scenario of Figure 4a, only the differences with respect to the traffic scenario of Figure 4a will be explained.

As U-turn indicator 44, the data processing apparatus 18 of the target vehicle 14 obtains a distance 84 between the space 68 suitable for a U-turn and the target vehicle 14 from the second data D2.

In the example of Figure 8a, a gap 66 in the barrier 64 between lanes of different orientations lies ahead of the target vehicle 14. Consequently, in case of one or more favorable driving state attributes, it may be determined that the likelihood that the target vehicle 14 is planning perform U-turn is high.

In the example of Figure 8b, the target vehicle 14 is situated adjacent to the gap 66 in the barrier 64 between lanes of different orientations. Consequently, in case of one or more favorable driving state attributes, it may be determined that the likelihood that the target vehicle 14 is planning to perform U-turn is still high.

In the example of Figure 8c, the gap 66 in the barrier 64 between lanes of different orientations lies behind the target vehicle 14. Consequently, it may be determined that the likelihood that the target vehicle 14 is planning to perform a U-turn is low. This may be independent of the driving state attributes.

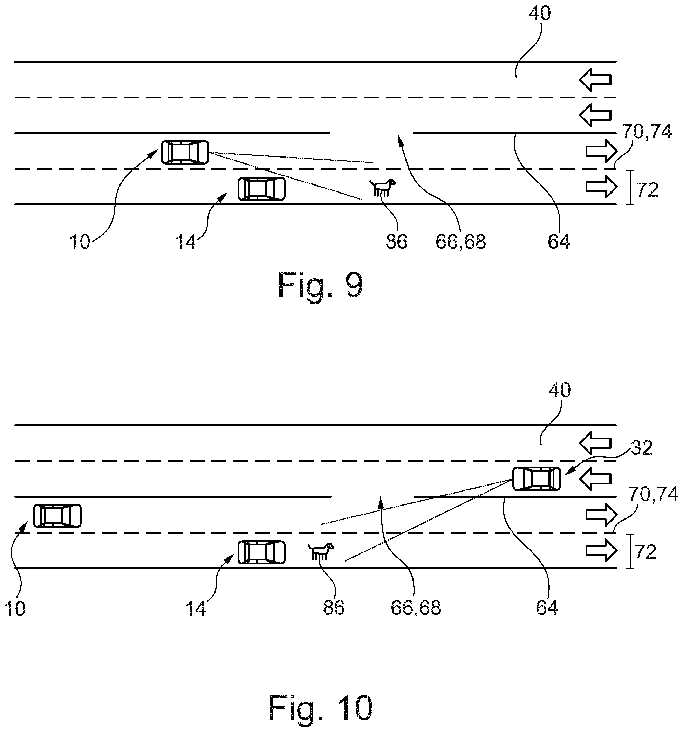

Another traffic scenario is shown in Figure 9. Due to the similarity to the traffic scenario of Figure 4a, only the differences with respect to the traffic scenario of Figure 4a will be explained.

In the traffic scenario of Figure 9, the second data D2 obtained by the data processing apparatus 18 of the ego-vehicle 10 is indicative of an obstacle 86 for the target vehicle 14. In the present example, the obstacle 86 is represented as a dog.

Due to the fact that a reduction of travelling speed 46 of the target vehicle 14 may be due to the obstacle 86, the likelihood that the target vehicle 14 is planning to perform a U-turn is determined to be low, even though the U-turn indicator 44 may be favorable.

The traffic scenario shown in Figure 10 is similar to the traffic scenario shown in Figure 9. This is why only the differences to the traffic scenario of Figure 9 will be explained hereinafter.

The second data D2 obtained by the data processing apparatus 18 of the ego-vehicle 10 is indicative of another vehicle travelling on the same road as the target vehicle 14 but on a different lane. This vehicle is the observer vehicle 32.

In the traffic scenario of Figure 10, the data processing apparatus 18 of the ego-vehicle 10 executes optional step S17 of the first method. Step S17 comprises requesting and/or receiving third data D3 indicative of an environment of the target vehicle 14 from the observer vehicle 32.

The data processing apparatus 18 of the observer vehicle 32 thereupon performs the third method, i.e. the method for controlling the observer vehicle 32.

The steps of the third method for controlling the observer vehicle 32 are schematically shown in Figure 15.

The third method comprises steps S31, S32 and S33. Step S34 is an optional step and will be explained further below.

Step S31 comprises receiving an assistance request R from the ego-vehicle 10 requesting third data D3 indicative of an environment of the target vehicle 14.

Step S32 comprises obtaining third data D3 indicative of the environment of the target vehicle 14.

Step S33 comprises providing the third data D3 to the ego-vehicle 10.

Coming back to the traffic scenario of Figure 10, the obstacle 86 ahead of the target vehicle 14 is not visible from the perspective of the ego-vehicle 10. However, it is visible from the perspective of the observer vehicle 32.

The data processing apparatus 18 of the observer vehicle 32 detects the obstacle 86 by means of the environment detection sensor 12 of the observer vehicle 32.

By providing the third data D3 indicative of the obstacle 86 ahead of the target vehicle 14 to the ego-vehicle 10, the data processing apparatus 18 of the ego-vehicle 10 can determine the likelihood that the target vehicle 14 is going to perform a U-turn further based on the third data D3.

In the present example of Figure 10, it is determined that the target vehicle 14 is unlikely to be planning to perform a U-turn. Instead, it is determined to be likely that a possible reduction in travelling speed 46 of the target vehicle 14 is due to the obstacle 86 ahead of the target vehicle 14.

In Figures 11a, 11b and 11c, three stages of another traffic scenario are illustrated.

Due to the similarities of the traffic scenario of Figures 11a, 11b and 11c to the traffic scenario of Figure 10, only the differences with respect to the traffic scenario of Figure 10 will be explained.

The data processing apparatus 18 of the ego-vehicle 10 again performs optional step S17 of the first method.

Additionally or alternatively to requesting and/or receiving third data D3 indicative of an environment of the target vehicle 14, step S17 also comprises requesting and/or receiving fourth data D4 indicative of the driver 34 of the target vehicle 14 from an observer vehicle 32.

Thereupon, the data processing apparatus 18 of the observer vehicle 32 again performs the third method.

Additionally or alternatively to receiving an assistance request R from the ego-vehicle 10 requesting third data D3 indicative of an environment of the target vehicle 14, step S31 of the third method also comprises receiving an assistance request R from the ego-vehicle 10 requesting fourth data D4 indicative of a driver 34 of the target vehicle 14.

Consequently, step S32 of the third method comprises in addition or as an alternative to obtain the fourth data D4 indicative of a driver 34 of the target vehicle 14.

The fourth data D4 may be indicative of a head pose 88 and/or an eye position 90 of the driver 34 of the target vehicle 14, which is exemplary shown in Figures 12a, 12b, 12c and 12d.

In Figure 12a, the driver 34 of the target vehicle 14 is looking into the rear-view mirror 92 of the target vehicle 14. In Figure 12b, the driver 34 of the target vehicle 14 is looking into a side mirror 94 of the target vehicle 14. In both of these cases, it can be inferred that the driver 34 of the target vehicle 14 is aware of the ego-vehicle 10 which is travelling behind the target vehicle 14 into the same direction but on a different lane than the target vehicle 14.

In Figure 12c, the driver 34 of the target vehicle 14 is shown to be looking at instrumentals of the target vehicle 14, e.g. at a screen of the navigation system or at dials for the radio or the air conditioning system. In these cases, it can be inferred that the driver 34 of the target vehicle 14 is distracted and therefore unaware of the ego-vehicle 10.

In Figure 12d, the driver 34 of the target vehicle is looking straight towards the observer vehicle 32. Also in this case, it can be inferred that the driver 34 of the target vehicle 14 is unaware of the ego-vehicle 10.

The data processing apparatus 18 of the ego-vehicle 10 determines the likelihood that the target vehicle 14 is planning perform a U-turn also based on the fourth data D4.

In cases in which the driver 34 of the target vehicle 14 is aware of the ego-vehicle 10, it may be determined to be unlikely that the target vehicle 14 and/or the driver 34 of the target vehicle 14 is planning to perform a U-turn.

In cases in which the driver 34 of the target vehicle 14 is unaware of the ego-vehicle 10, the likelihood that the target vehicle 14 and/or the driver 34 of the target vehicle 14 is planning to perform a U-turn may be determined to be high.

Figures 11a, 11b and 11c also show further alternatives for obtaining a U-turn indicator 44 at the data processing apparatus 18 of the ego-vehicle 10.

One alternative comprises obtaining a time T1 needed for the target vehicle 14 to reach a space 68 suitable for a U-turn.

Another alternative comprises obtaining a time T2 needed for a vehicle, in the present case the observer vehicle 32, to reach the space 68 suitable for a U-turn wherein the vehicle is travelling on same road 40 as the target vehicle 14 but on a different lane.

The alternatives of obtaining a time T1 needed for the target vehicle 14 to reach the space 68 suitable for a U-turn and obtaining a time T2 needed for another vehicle, in the present case the observer vehicle 32, travelling on same road 40 as the target vehicle 14 but on a different lane to reach the space 68 suitable for a U-turn may also be combined. Thus, it can be determined if the target vehicle 14 and the other vehicle reach the space 68 suitable for a U-turn at the same point in time or within a predefined time interval. If so, it may be considered impossible for the target vehicle 14 to perform a U-turn.

A further alternative for obtaining a U-turn indicator 44 comprises obtaining a distance 96 between the space 68 suitable for a U-turn and a vehicle travelling on the same road 40 as the target vehicle 14 but on a different lane.

If the distance 96 between the space 68 suitable for a U-turn and a vehicle travelling on the same road as the target vehicle 14 but on a different lane is equal to or within a predefined distance threshold to the distance 84 between the space 68 suitable for U-turn and the target vehicle 14, it may be considered impossible for the target vehicle 14 to perform a U-turn.

An optional step S16 of the first method comprises evaluating whether the driving state attribute 42 matches a U-turn possibility as indicated by the U-turn indicator 44 (see Figure 13). The likelihood that the target vehicle 14 is planning to perform a U-turn may then further be based on this evaluation.

In the traffic scenario of Figures 11a, 11b and 11c, it is determined as driving state attribute 42 that the target vehicle 14 is reducing its travelling speed 46.

As U-turn indicator 44, a gap 66 in the barrier 64 between lanes of opposite driving directions, indicating a possibility for the target vehicle 14 to perform a U-turn, is obtained.

Hence, the driving state attribute 42 matches a possibility to perform a U-turn and it is determined that the likelihood that the target vehicle 14 is planning to perform U-turn is high.

At this point, the ego-vehicle could be triggered to execute a collision mitigation measure according to step S22 of the second method. However, in the present example of the traffic scenario of Figures 11a, 11b and 11c, the observer vehicle 32 performs a collision mitigating maneuver to mitigate a collision risk between the ego-vehicle 10 and the target vehicle 14. This constitutes the optional step S34 of the third method as shown in Figure 15.

The observer vehicle 32 adjusts its travelling speed 46 in a way that it reaches the gap 66 in the barrier 64 between lanes of opposite driving directions at the same time the target vehicle 14 reaches the gap 66 in the barrier 64 between lanes of opposite driving directions.

It is assumed that the data processing apparatus 18 of the observer vehicle 32 obtains fourth data D4 indicative of the driver 34 of the target vehicle 14 as shown in Figure 12d. The fourth data D4 indicates that the driver 34 of the target vehicle 14 is in principle attentive and aware of the observer vehicle 32 but unaware of the ego-vehicle 10.

When the observer vehicle 32 adjusts its travelling speed 46 so that it reaches the gap 66 in the barrier 64 between lanes of opposite driving directions at the same time as the target vehicle 14, the target vehicle 14 is forced to wait and delay its planned U-turn. During the waiting time, the ego-vehicle 10 can safely overtake and pass by the target vehicle 14. This situation is shown in Figure 11b.

Figure 11c shows an end-stage of the traffic scenario in which both the observer vehicle 32 and the ego-vehicle 10 have driven past the gap 66 in the barrier 64 between lanes of opposite driving directions. At this point in time, the target vehicle 14 can perform the planned U-turn without any risk of a collision with the ego-vehicle 10 and/or with the observer vehicle 32.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: ego-vehicle
- 12: environment detection sensor
- 14: target vehicle
- 16: communication interface
- 18: data processing apparatus
- 20: data storage unit
- 22: data processing unit
- 24: computer-readable storage medium
- 26: look-up table
- 28: geometry attribute
- 30: computer program
- 32: observer vehicle
- 34: driver
- 36: system
- 38: data link
- 40: road
- 42: driving state attribute
- 44: U-turn indicator
- 46: travelling speed
- 48: taillight
- 50: headlight
- 52: turn indicator
- 54: braking light
- 56: steering direction
- 58: front wheel
- 60: side area
- 62: rear wheel
- 64: barrier
- 66: gap
- 68: space suitable for U-turn
- 70: lane marking
- 72: width of lane
- 74: course of lane
- 76: road sign
- 78: reverse light
- 80: hazard light
- 82: space adjacent to road
- 84: distance between space suitable for U-turn and target vehicle
- 86: obstacle
- 88: head pose
- 90: eye position
- 92: rear-view mirror
- 94: side mirror
- 96: distance between space suitable for U-turn and vehicle travelling on different lane than target vehicle

- D1: first data
- D2: second data
- D3: third data
- D4: fourth data
- R: assistance request
- T1: time needed for target vehicle to reach space suitable for U-turn
- T2: time needed for vehicle travelling on different lane than target vehicle to reach space suitable for U-turn
- W: warning

## Claims

1. A method for determining a likelihood that a target vehicle (14) is planning to perform a U-turn from a perspective of an ego-vehicle (10), the method comprising:
- obtaining first data (D1) indicative of the target vehicle (14),
- obtaining at least one driving state attribute (42) of the target vehicle (14) based on the first data (D1),
- obtaining second data (D2) indicative of an environment of the target vehicle (14),
- obtaining a U-turn indicator (44) indicative of a possibility of the target vehicle (14) to perform a U-turn in the environment based on the second data (D2), and
- determining the likelihood that the target vehicle (14) is planning to perform a U-turn at least based on the at least one driving state attribute (42) and the U-turn indicator (44).

2. The method according to claim 1, wherein the at least one driving state attribute (42) is indicative of one or more of:
- a travelling speed (46) of the target vehicle (14),
- an activation of a tail light (48) or a headlight (50) of the target vehicle (14),
- an activation of a turn indicator (52) of the target vehicle (14),
- an activation of a hazard light (80) of the target vehicle (14),
- an activation of a reverse light (78) of the target vehicle (14),
- an activation of a braking light (54) of the target vehicle (14), and/or
- a steering direction (56) of the target vehicle (14).

3. The method of claim 1 or 2, wherein the second data (D2) is indicative of one or more of:
- an obstacle (86) for the target vehicle (14),
- a lane marking (70) of a road (40) on which the target vehicle (14) is travelling,
- a width (72) and course (72) of a lane of the road (40) on which the target vehicle (14) is travelling,
- a space (82) adjacent to a road on which the target vehicle (14) is travelling,
- a barrier (64) between lanes of opposite orientation of the road (40) on which the target vehicle (14) is travelling,
- a road sign (76) associated with the environment, and/or
- a vehicle travelling on the same road (40) as the target vehicle (14) but on a different lane.

4. The method of any one of the preceding claims, wherein obtaining a U-turn indicator (44) comprises one or more of:
- obtaining a width of a space (68) suitable for a U-turn,
- obtaining a distance (84) between the space (68) suitable for a U-turn and the target vehicle (14),
- obtaining a time (T1) needed for the target vehicle (14) to reach the space (68) suitable for a U-turn,
- obtaining a distance (96) between the space (68) suitable for a U-turn and a vehicle travelling on the same road (40) as the target vehicle (14) but on a different lane, and/or
- obtaining a time (T2) needed for a vehicle to reach the space (68) suitable for a U-turn, and wherein the vehicle is travelling on the same road (40) as the target vehicle (40) but on a different lane.

5. The method of any one of the preceding claims, further comprising
- obtaining a geometry attribute (28) of the target vehicle (14) based on the first data (D1), and
- determining the likelihood that the target vehicle (14) is planning to perform a U-turn further based on the geometry attribute (28).

6. The method of any one of the preceding claims, further comprising
- evaluating whether the driving state attribute (42) matches a U-turn possibility as indicated by the U-turn indicator (44), and
- determining the likelihood that the target vehicle (14) is planning to perform a U-turn further based on the evaluation.

7. The method according to any of the preceding claims, further comprising
- receiving third data (D3) indicative of an environment of the target vehicle (14) and/or fourth data (D4) indicative of a driver (34) of the target vehicle (14) from an observer vehicle (32), and
- determining the likelihood that the target vehicle (14) is planning to perform a U-turn further based on the third data (D3) and/or on the fourth data (D4).

8. The method of claim 7, wherein the third data (D3) is indicative of an obstacle (86) in the environment of the target vehicle (14) and/or wherein the fourth data (D4) is indicative of a driver's head pose (88) and/or of a driver's eye position (90).

9. A method for controlling an ego-vehicle (10), wherein a target vehicle (14) is located in the surroundings of the ego-vehicle (10), the method comprising:
- determining a likelihood that the target vehicle (14) is planning to perform a U-turn according to the method of any one of the preceding claims, and
- triggering a collision mitigation measure of the ego-vehicle (10) if the likelihood exceeds a likelihood threshold.

10. A method for controlling an observer vehicle (32), wherein an ego-vehicle (10) and a target vehicle (14) are located in the surroundings of the observer vehicle (32), the method comprising:
- receiving an assistance request (R) from the ego-vehicle (10) requesting third data (D3) indicative of an environment of the target vehicle (14) and/or fourth data (D4) indicative of a driver (34) of the target vehicle (14),
- obtaining third data (D3) indicative of an environment of the target vehicle (14) and/or fourth data (D4) indicative of a driver (34) of the target vehicle (14), and
- providing the third data (D3) and/or the fourth data (D4) to the ego-vehicle (10).

11. The method according to claim 10, further comprising:
- causing the observer vehicle (32) to perform a collision mitigation maneuver to mitigate a collision risk between the ego-vehicle (10) and the target vehicle (14).

12. A data processing apparatus (18) comprising means for carrying out the method of any one of claims 1 to 8, the method of claim 9 or the method of any one of claims 10 and 11.

13. A computer program (30) comprising instructions which, when the computer program (30) is executed by a computer, cause the computer to carry out the method of any one of claims 1 to 8, the method of claim 9 or the method of any one of claims 10 and 11.

14. A computer-readable storage medium (24) comprising instructions which, when executed by a computer, cause the computer to carry out the method of any one of any one of claims 1 to 8, the method of claim 9 or the method of any one of claims 10 and 11.

15. A system (36) for determining a likelihood that a target vehicle (14) is planning to perform a U-turn, the system (36) comprising a data processing apparatus (18) comprising means for carrying out the method of any one of claims 1 to 8 and/or a data processing apparatus (18) comprising means for carrying out the method of claim 9 and/or a data processing apparatus (18) comprising means for carrying out the method of any one of claims 10 and 11.

## Amended claims

### Amended claims in accordance with Rule 137(2) EPC.

1. A method for determining a likelihood that a target vehicle (14) is planning to perform a U-turn from a perspective of an ego-vehicle (10), the method comprising:
- obtaining first data (D1) indicative of the target vehicle (14),
- obtaining at least one driving state attribute (42) of the target vehicle (14) based on the first data (D1),
- obtaining second data (D2) indicative of an environment of the target vehicle (14),
- obtaining a U-turn indicator (44) indicative of a possibility of the target vehicle (14) to perform a U-turn in the environment based on the second data (D2), and
- determining the likelihood that the target vehicle (14) is planning to perform a U-turn at least based on the at least one driving state attribute (42) and the U-turn indicator (44),
**characterized in that** the method further comprises:
- transmitting an assistance request (R) to an observer vehicle (32) requesting third data (D3) indicative of an environment of the target vehicle (14) and/or fourth data (D4) indicative of a driver (34) of the target vehicle (14),
- receiving third data (D3) indicative of an environment of the target vehicle (14) from the observer vehicle (32) and/or fourth data (D4) indicative of a driver (34) of the target vehicle (14) from the observer vehicle (32), and
- determining the likelihood that the target vehicle (14) is planning to perform a U-turn further based on the third data (D3) and/or on the fourth data (D4).

2. The method according to claim 1, wherein the at least one driving state attribute (42) is indicative of one or more of:
- a travelling speed (46) of the target vehicle (14),
- an activation of a tail light (48) or a headlight (50) of the target vehicle (14),
- an activation of a turn indicator (52) of the target vehicle (14),
- an activation of a hazard light (80) of the target vehicle (14),
- an activation of a reverse light (78) of the target vehicle (14),
- an activation of a braking light (54) of the target vehicle (14), and/or
- a steering direction (56) of the target vehicle (14).

3. The method of claim 1 or 2, wherein the second data (D2) is indicative of one or more of:
- an obstacle (86) for the target vehicle (14),
- a lane marking (70) of a road (40) on which the target vehicle (14) is travelling,
- a width (72) and course (72) of a lane of the road (40) on which the target vehicle (14) is travelling,
- a space (82) adjacent to a road on which the target vehicle (14) is travelling,
- a barrier (64) between lanes of opposite orientation of the road (40) on which the target vehicle (14) is travelling,
- a road sign (76) associated with the environment, and/or
- a vehicle travelling on the same road (40) as the target vehicle (14) but on a different lane.

4. The method of any one of the preceding claims, wherein obtaining a U-turn indicator (44) comprises one or more of:
- obtaining a width of a space (68) suitable for a U-turn,
- obtaining a distance (84) between the space (68) suitable for a U-turn and the target vehicle (14),
- obtaining a time (T1) needed for the target vehicle (14) to reach the space (68) suitable for a U-turn,
- obtaining a distance (96) between the space (68) suitable for a U-turn and a vehicle travelling on the same road (40) as the target vehicle (14) but on a different lane, and/or
- obtaining a time (T2) needed for a vehicle to reach the space (68) suitable for a U-turn, and wherein the vehicle is travelling on the same road (40) as the target vehicle (40) but on a different lane.

5. The method of any one of the preceding claims, further comprising
- obtaining a geometry attribute (28) of the target vehicle (14) based on the first data (D1), and
- determining the likelihood that the target vehicle (14) is planning to perform a U-turn further based on the geometry attribute (28).

6. The method of any one of the preceding claims, further comprising
- evaluating whether the driving state attribute (42) matches a U-turn possibility as indicated by the U-turn indicator (44), and
- determining the likelihood that the target vehicle (14) is planning to perform a U-turn further based on the evaluation.

7. The method of any one of the preceding claims, wherein the third data (D3) is indicative of an obstacle (86) in the environment of the target vehicle (14) and/or wherein the fourth data (D4) is indicative of a driver's head pose (88) and/or of a driver's eye position (90).

8. The method of any one of the preceding claims, wherein a target vehicle (14) is located in the surroundings of the ego-vehicle (10), the method further comprising:
- triggering a collision mitigation measure of the ego-vehicle (10) if the likelihood exceeds a likelihood threshold.

9. A method for controlling an observer vehicle (32), wherein an ego-vehicle (10) and a target vehicle (14) are located in the surroundings of the observer vehicle (32), the ego-vehicle (10) performing the method for determining a likelihood that a target vehicle (14) is planning to perform a U-turn according to any one of claims 1 to 8, the method for controlling an observer vehicle (32) comprising:
- receiving an assistance request (R) from the ego-vehicle (10) requesting third data (D3) indicative of an environment of the target vehicle (14) and/or fourth data (D4) indicative of a driver (34) of the target vehicle (14),
- obtaining third data (D3) indicative of an environment of the target vehicle (14) and/or fourth data (D4) indicative of a driver (34) of the target vehicle (14), and
- providing the third data (D3) and/or the fourth data (D4) to the ego-vehicle (10).

10. The method according to claim 9, further comprising:
- causing the observer vehicle (32) to perform a collision mitigation maneuver to mitigate a collision risk between the ego-vehicle (10) and the target vehicle (14).

11. A data processing apparatus (18) comprising means for carrying out the method of any one of claims 1 to 8 or the method of any one of claims 9 and 10.

12. A computer program (30) comprising instructions which, when the computer program (30) is executed by a computer, cause the computer to carry out the method of any one of claims 1 to 8 or the method of any one of claims 9 and 10.

13. A computer-readable storage medium (24) comprising instructions which, when executed by a computer, cause the computer to carry out the method of any one of any one of claims 1 to 8 or the method of any one of claims 9 and 10.

14. A system (36) for determining a likelihood that a target vehicle (14) is planning to perform a U-turn, the system (36) comprising a data processing apparatus (18) comprising means for carrying out the method of any one of claims 1 to 8 and/or a data processing apparatus (18) comprising means for carrying out the method of any one of claims 9 and 10.
